(19) Europäisches Patentamt
European Patent Office
Office européen des brevets

(11) **EP 4 510 215 A1**

(12) **EUROPEAN PATENT APPLICATION**

(43) Date of publication:
**19.02.2025 Bulletin 2025/08**

(21) Application number: **24186204.4**

(22) Date of filing: **03.07.2024**

(51) International Patent Classification (IPC):
**H01M 4/131** (2010.01)   **H01M 4/36** (2006.01)
**H01M 4/505** (2010.01)   **H01M 4/525** (2010.01)
**H01M 10/052** (2010.01)   H01M 4/02 (2006.01)

(52) Cooperative Patent Classification (CPC):
**H01M 4/131; H01M 4/364; H01M 4/505;
H01M 4/525; H01M 10/052;** H01M 2004/028

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **14.07.2023 JP 2023115642**

(71) Applicant: **Prime Planet Energy & Solutions, Inc.
Chuo-ku
Tokyo
103-0022 (JP)**

(72) Inventor: **SUGIYAMA, Junichi
Tokyo, 103-0022 (JP)**

(74) Representative: **Kuhnen & Wacker
Patent- und Rechtsanwaltsbüro PartG mbB
Prinz-Ludwig-Straße 40A
85354 Freising (DE)**

(54) **POSITIVE ELECTRODE AND NON-AQUEOUS ELECTROLYTE SECONDARY BATTERY**

(57)    It is to provide a technique capable of implementing a non-aqueous electrolyte secondary battery in which both of an outstanding output characteristic and storage characteristic are achieved.

A herein disclosed positive electrode includes a positive electrode current collector 52, and a positive electrode active material layer 54 arranged on a surface of the positive electrode current collector 52. The positive electrode active material layer 54 contains a first positive electrode active material particle 100 and a second positive electrode active material particle 200. The first positive electrode active material particle 100 is a solid particle whose average particle diameter based on a laser diffraction scattering method is equal to or more than 1 $\mu$m and not more than 7 $\mu$m. The second positive electrode active material particle 200 includes an outer shell part 210 and a hollow part 220 surrounded by the outer shell part 210, and is a hollow particle whose average grain diameter based on the laser diffraction scattering method is equal to or more than 8 $\mu$m and not more than 14 $\mu$m. A mass M1 of the first positive electrode active material particle 100 and a mass M2 of the second positive electrode active material particle 200 satisfy a formula: $0 < M1/(M1 + M2) \leq 0.6$.

FIG.1

**Description**

BACKGROUND OF THE DISCLOSURE

Technical Field

The present disclosure relates to a positive electrode and non-aqueous electrolyte secondary battery.

DESCRIPTION OF BACKGROUND

As a positive electrode active material used for a non-aqueous electrolyte secondary battery, a positive electrode active material particle having a hollow structure is known. By making the positive electrode active material particle have the hollow structure, a specific surface area size is increased, and thus, for example, it is expected to enhance an output characteristic. Japanese Patent Application Publication No. 2019-077577 and International Publication No. 2014-181891 disclose the positive electrode active material having the hollow structure. Japanese Patent Application Publication No. 2017-123236 and Japanese Patent Application Publication No. 2021-120937 disclose a positive electrode that contains the positive electrode active material particle having the hollow structure and a positive electrode active material particle having a solid structure.

SUMMARY

Anyway, although it is possible by making the positive electrode active material particle have the hollow structure to enhance the output characteristic, the specific surface area size of the positive electrode active material particle is increased so as to make the electrolytic solution and the positive electrode active material particle become easily response and thus a contradiction can be caused that a gas becomes easily generated inside a case. Therefore, a technique for achieving both the output characteristic and a storage characteristic is desired.
Thus, the present disclosure has a main object to provide a technique of implementing a non-aqueous electrolyte secondary battery in which both of the outstanding output characteristic and the storage characteristic are achieved.

[Solution to Problem]

One aspect of the herein disclosed technique is a positive electrode used for a non-aqueous electrolyte secondary battery. This positive electrode includes a current collector, and an active material layer that is arranged on a surface of the current collector. The active material layer contains a first positive electrode active material particle and a second positive electrode active material particle. The first positive electrode active material particle has an average particle diameter which is based on a laser diffraction scattering method and which is equal to or more than 1 $\mu$m and not more than 7 $\mu$m, and has a void rate which is measured on a basis of a cross section SEM image and which is less than 10%. The second positive electrode active material particle includes an outer shell part and a hollow part that is surrounded by the outer shell part. The second positive electrode active material particle has an average particle diameter which is based on the laser diffraction scattering method and which is equal to or more than 8 $\mu$m and not more than 14 $\mu$m, and has a rate of voids which is measured on a basis of a cross section SEM image and which is equal to or more than 10%. 80% or more of the voids are present at an inner side more than the outer shell part. A mass M1 of the first positive electrode active material particle and a mass M2 of the second positive electrode active material particle satisfy a following formula:

$$0 < M1/(M1 + M2) \leq 0.6.$$

The positive electrode described above includes the first positive electrode active material particle which is a solid particle in which a comparatively small number of the voids are present, and includes the second positive electrode active material particle which is a hollow particle in which a comparatively large number of the voids are present. By making a size of the first positive electrode active material particle having the solid structure be smaller than a size of the second positive electrode active material particle and have a comparatively small particle diameter (for example, equal to or less than 7 $\mu$m), a lithium diffusion distance on the first positive electrode active material particle becomes shorter, and thus it is possible to enhance the output characteristic of the secondary battery. In addition, by making a size of the second positive electrode active material particle having the hollow structure be larger than a size of the first positive electrode active material particle and have a comparatively large particle diameter (for example, equal to or more than 8 $\mu$m), the specific surface area size of the second positive electrode active material particle is decreased, and thus it is possible to suppress the gas generation so as to enhance the storage characteristic. By adjusting a mix rate of the first positive electrode active material particle and the second positive electrode active material particle as described above to be within an appropriate range, it is possible to implement the non-aqueous electrolyte secondary battery in which the outstanding output characteristic and storage characteristic both are achieved.

BRIEF DESCRIPTION OF THE DRAWINGS

FIG. 1 is a cross section view that schematically shows a positive electrode sheet in accordance with one embodiment.
FIG. 2 is a cross section view that schematically shows a structure of a second positive electrode active material particle in accordance with one embodiment.
FIG. 3 is a cross section view that schematically shows a configuration of a lithium ion secondary battery in accordance with one embodiment.
FIG. 4 is a schematic exploded view that shows a configuration of a wound electrode body.
FIG. 5 is a schematic view that shows a rough configuration of a crystallization apparatus.

DETAILED DESCRIPTION

Below, an embodiment of the herein disclosed technique will be explained while referring to figures. Incidentally, the matters other than matters particularly mentioned in this description and required for implementing the present technique (for example, a general configuration, a manufacturing process, or the like, of a non-aqueous electrolyte secondary battery, which does not characterize the present technique) can be grasped as design matters of those skilled in the art based on the related art in the present field. The present technique can be implemented on the basis of a content disclosed in the present description and a common general technical knowledge in this field. Incidentally, each figure is schematically drawn, and thus a dimensional relation (such as length, width, and thickness) might not always reflect an actual dimensional relation. Additionally, in figures described below, the same numerals and signs are given to the members/parts providing the same effects, and overlapped explanations might be omitted or simplified.

In the present description, when a numerical value range is described to be "A to B (here, A and B are arbitrary values)", it means "equal to or more than A and not more than B" and it semantically covers meanings "more than A and less than B", "more than A and equal to or less than B", and "equal to or more than A and less than B".

In the present description, the term "non-aqueous electrolyte secondary battery" represents an electric storage device that uses a non-aqueous electrolyte as a charge carrier and that can repeatedly charge and discharge in accordance with movement of the charge carrier between positive and negative electrodes. Additionally, in the present description, the term "lithium ion secondary battery" represents an electric storage device that uses a lithium ion as the charge carrier and that implements charging and discharging by the movement of an electric charge in accordance with the lithium ion between the positive and negative electrodes.

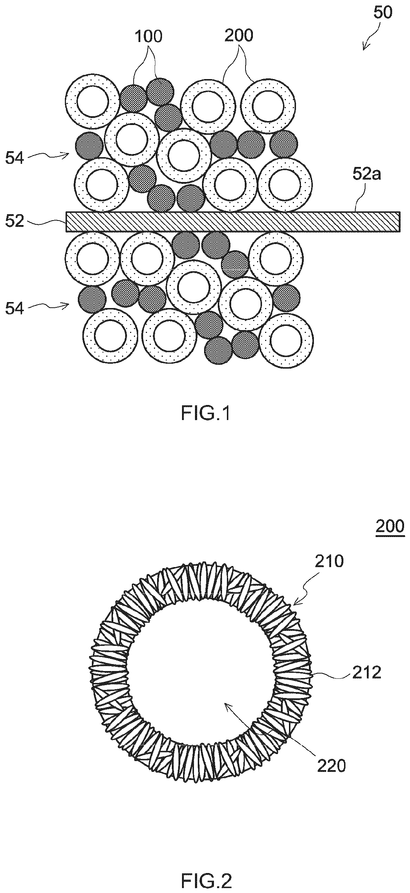

The herein disclosed positive electrode is used for the non-aqueous electrolyte secondary battery, or suitably used for the lithium ion secondary battery. Below, one embodiment of the herein disclosed positive electrode will be particularly explained, while referring to FIG. 1. FIG. 1 is a cross section view that schematically shows a positive electrode sheet 50 in accordance with the present embodiment, and is a cross section view that is shown along a thickness direction and a width direction. The positive electrode sheet 50 can be used as a positive electrode of the lithium ion secondary battery.

As shown in FIG. 1, the positive electrode sheet 50 includes a positive electrode current collector 52, and a positive electrode active material layer 54 arranged on a surface of the positive electrode current collector 52. Here, the positive electrode active material layer 54 is arranged directly on the surface of the positive electrode current collector 52 but might be arranged indirectly. The positive electrode active material layer 54 might be provided on one surface of the positive electrode current collector 52, or might be provided on both surfaces of the positive electrode current collector 52 as shown in FIG. 1.

As shown in FIG. 1, on an end part in a width direction of the positive electrode sheet 50, the positive electrode current collector 52 might be provided with a positive electrode current collector exposed part 52a on which the positive electrode active material layer 54 is not provided. The positive electrode current collector exposed part 52a can function as an electrical collector part. In some embodiments, the positive electrode current collector exposed part 52a might be provided on an end part of the positive electrode current collector 52 that is processed in a tab shape.

The shape of the positive electrode current collector 52 is a foil shape (or a sheet shape) in the present embodiment, but is not restricted to this. The positive electrode current collector 52 might be formed in various forms, for example, a rod shape, a plate shape, a mesh shape, or the like. As a property of the positive electrode current collector 52, similarly to the conventional lithium ion secondary battery, it is possible to use a metal having a favorable electrically conductive property (for example, aluminum, nickel, titanium, stainless steel, or the like), and the aluminum is preferable among them. As the positive electrode current collector 52, an aluminum foil is preferable.

A size of the positive electrode current collector 52 is not particularly restricted, and might be suitably decided in accordance with a battery design. In a case where the aluminum foil is used as the positive electrode current collector 52, a thickness of it, which is not particularly restricted, would be, for example, equal to or more than 5 $\mu$m and not more than 35 $\mu$m, or preferably equal to or more than 6 $\mu$m and not more than 20 $\mu$m.

The positive electrode active material layer 54 contains a first positive electrode active material particle 100 and a second positive electrode active material particle 200.

The first positive electrode active material particle 100 is a solid particle having a solid structure. The term "solid particle" in the present description means a particle whose rate of void portions (void rate) with respect to a whole cross section of the particle is less than 10% on a cross section SEM image of the particle.

Regarding the first positive electrode active material particle 100, a void rate measured with a cross section SEM image is less than 10%, preferably equal to or less than 7%, or further preferably equal to or less than 5%. By doing this, it is possible to enhance a capacity characteristic. Incidentally, in the present description, the term "void rate" means an arithmetical mean of the void rates of at least 100 particles selected at random.

A shape of the first positive electrode active material particle 100, which is not particularly restricted, might be, for example, a spherical shape or an approximately spherical shape. Additionally, in some aspects, the first positive electrode active material particle 100 might be formed in an indeterminate shape, or the like.

In the present description, the wording "approximately spherical shape" represents a form regarded to be an approximately spherical body as a whole, whose average aspect ratio based on a cross section observation image with an electron microscope is approximately 1 to 2, preferably 1 to 1.5, or further preferably 1 to 1.2. Additionally, in the present description, the term "aspect ratio" means a value that a long side of a rectangle is divided by a short side of the rectangle, while the rectangle has the minimum area size among rectangles circumscribing a contour of the particle. In addition, the term "average aspect ratio" represents an arithmetical mean of aspect ratios of at least 100 particles selected at random.

An average particle diameter of the first positive electrode active material particle 100 is, for example, equal to or more than 1 $\mu$m, preferably equal to or more than 2 $\mu$m, or further preferably equal to or more than 3 $\mu$m. In addition, the average particle diameter of the first positive electrode active material particle 100 is, for example, equal to or less than 7 $\mu$m, preferably equal to or less than 6 $\mu$m, or further preferably equal to or less than 5 $\mu$m. As the average particle diameter of the first positive electrode active material particle 100 being the solid particle is smaller, a lithium diffusion distance becomes shorter, and thus it is possible to enhance the output characteristic of the secondary battery.

Incidentally, in the present description, the term "average particle diameter" means a particle diameter (D50) corresponding to an accumulation 50% of a particle size distribution on a volume basis measured by a laser diffraction scattering type particle size analyzer.

A BET specific surface area size of the first positive electrode active material particle 100 is, for example, equal to or more than 0.5 m$^2$/g, equal to or more than 0.8 m$^2$/g, equal to or more than 1.5 m$^2$/g, or equal to or more than 1.8 m$^2$/g. In addition, the BET specific surface area size of the first positive electrode active material particle 100 is, for example, equal to or less than 3 m$^2$/g, equal to or less than 2.5 m$^2$/g, equal to or less than 2.4 m$^2$/g, equal to or less than 2.3 m$^2$/g, or equal to or less than 2.2 m$^2$/g. Regarding the BET specific surface area size, it tends to further enhance the output characteristic as a value of the BET specific surface area size is higher, and it tends to further enhance the storage characteristic as a value of the BET specific surface area size is lower. By making the first positive electrode active material particle 100 have the BET specific surface area size being within a range defined by the above described upper limit and the above described lower limit, a balance of the output characteristic and the storage characteristic is suitably adjusted, achieving both of the output characteristic and the storage characteristic can be implemented at a higher level.

The first positive electrode active material particle 100 could be, for example, a lithium-transition metal complex oxide, a lithium transition metal phosphate compound, or the like. A crystal structure of the positive electrode active material, which is not particularly restricted, might be a layer structure, a spinel structure, an olivine structure, or the like.

Regarding the lithium-transition metal complex oxide, it is preferable to use a lithium-transition metal complex oxide containing at least 1 kind among Ni, Co, and Mn as a transition metal element, and then it is possible as a specific example to use a lithium nickel type composite oxide, a lithium cobalt type composite oxide, a lithium manganese type composite oxide, a lithium nickel manganese type composite oxide, a lithium nickel cobalt manganese type composite oxide, a lithium nickel cobalt aluminum type composite oxide, a lithium iron nickel manganese type composite oxide, or the like.

Incidentally, "lithium nickel cobalt manganese type composite oxide" in the present description is a term that semantically covers not only an oxide whose configuration element is Li, Ni, Co, Mn, or O, but also an oxide containing 1 kind, 2 kinds, or more of additive elements other than them. As an example of the additive element described above, it is possible to use a transition metal element, a typical metal element, such as Mg, Ca, Al, Ti, V, Cr, Y, Zr, Nb, Mo, Hf, Ta, W, Na, Fe, Zn, and Sn, or the like. In addition, the additive element might be a semimetal element, such as B, C, Si, and P, or a nonmetal element, such as S, F, Cl, Br, and I. This matter is similar to the above described lithium nickel type composite oxide, lithium cobalt type composite oxide, lithium manganese type composite oxide, lithium nickel manganese type composite oxide, lithium nickel cobalt aluminum type composite oxide, lithium iron nickel manganese type composite oxide, or the like.

As the lithium transition metal phosphate compound, it is possible to use, for example, lithium iron phosphate ($LiFePO_4$), lithium manganese phosphate ($LiMnPO_4$), lithium manganese iron phosphate, or the like.

In the present embodiment, the first positive electrode active material particle 100 includes a composition represented by a below described general formula (i):

$$Li_dNi_{(1-x-y-z)}Co_xMn_yA_zO_2 \qquad \text{(i)}$$

However, in the general formula (i), $0 \le x \le 0.5$, $0 \le y \le 0.5$, $0 \le z \le 0.1$, and $0.95 \le d \le 1.2$ are satisfied. Additionally, in general formula (i), A is one or more kinds of elements selected from a group consisted of Al, Ti, Zr, Nb, Mo, and W.

In some aspects, the first positive electrode active material particle 100 contains at least Ni as the transition metal. In other words, regarding the above described aspect, the general formula (i) further satisfies $x + y + z < 1$.

In some aspects, a rate of the Ni is higher than the total rate of the Co and the Mn. In short, the general formula (i) might satisfy $x + y + z < 0.5$.

In some aspects, the first positive electrode active material particle 100 contains the Ni, the Co, and the Mn. In short, the general formula (i) might satisfy $0 < x < 0.5$ and $0 < y < 0.5$. Additionally, in some aspects, $0 < x < 0.3$ and $0 < y < 0.3$ might be satisfied.

The second positive electrode active material particle 200 is a hollow particle having a hollow structure. FIG. 2 is a cross section view that schematically shows a structure of the second positive electrode active material particle 200 in accordance with the present embodiment. The second positive electrode active material particle 200 contains an outer shell part 210 and a hollow part 220.

In the present description, the term "hollow particle" means a particle in which the rate of the void portions is equal to or more than 10% with respect to a whole cross section of the particle on the cross section SEM image of the particle and 70% or more of the voids are positioned at an inner side of the particle more than the outer shell part.

The void rate measured with the cross section SEM image of the second positive electrode active material particle 200 is, for example, equal to or more than 10%, preferably equal to or more than 20%, or further preferably equal to or more than 25%. By doing this, a specific surface area size is increased and the Li ion tends to become easily responsive, and thus the output characteristic can be enhanced.

A shape of the second positive electrode active material particle 200, which is not particularly restricted, might be, for example, a spherical shape or an approximately spherical shape. Additionally, in some aspects, the second positive electrode active material particle 200 might be formed in an indeterminate shape, or the like.

An average particle diameter of the second positive electrode active material particle 200 is, for example, equal to or more than 8 $\mu$m, equal to or more than 9 $\mu$m, equal to or more than 10 $\mu$m, or equal to or more than 11 $\mu$m. In addition, the average particle diameter of the second positive electrode active material particle 200 is, for example, equal to or less than 14 $\mu$m, preferably equal to or less than 13 $\mu$m, or further preferably equal to or less than 12 $\mu$m. As the average particle diameter of the second positive electrode active material particle 200 being hollow particles is larger, a response property of the second positive electrode active material particle 200 and the electrolyte can be suppressed more, and thus it tends to suppress gas generation and to enhance the storage characteristic of the secondary battery. In addition, as the average particle diameter of the second positive electrode active material particle 200 is smaller, the specific surface area size is increased more, and thus it tends to enhance the output characteristic. By making the second positive electrode active material particle 200 have the average particle diameter within the range defined by the above described upper limit and the above described lower limit, it is possible to suitably adjust the balance of the output characteristic and the storage characteristic.

The outer shell part 210 contains plural primary particles 212. In the present embodiment, the outer shell part 210 is formed by the plural primary particles 212 be aggregated with physical or chemical binding force. In the present description, the term "primary particle" means a minimum unit configuring the positive electrode active material particle, and in particular means a minimum unit decided on the basis of an apparent geometric form.

The outer shell part 210 might have a single layer structure or might have a multi layers structure in which plural layers are overlapped.

An average thickness of the outer shell part 210 with respect to the average particle diameter of the second positive electrode active material particle 200 might be, for example, equal to or less than 1/5, or preferably equal to or less than 1/6. In addition, the average thickness of the outer shell part 210 with respect to the average particle diameter of the second positive electrode active material particle 200 might be, for example, equal to or more than 1/10, or might be equal to or more than or 1/8. By making the average thickness of the outer shell part 210 be thinner with respect to the average particle diameter of the second positive electrode active material particle 200, it is possible to decrease a diffusion resistance of a Li ion and thus to enhance the output characteristic.

Incidentally, in the present description, a thickness of the outer shell part 210 means a thickness measured on the cross section observation image of the second positive electrode active material particle 200 with the electron microscope, and the average thickness of the outer shell part 210 means an arithmetical mean of the thickness of the outer shell part 210 measured on at least 100 second positive electrode active material particles 200.

A shape of the primary particle 212 could be, for example, a needle shape, a plate shape, an ellipse shape, or the like. In addition, an average aspect ratio (long axis length / short axis length) based on a cross section observation image of the second positive electrode active material particle 200 with the electron microscope is, for example, equal to or more than 2, preferably equal to or more than 3, or further preferably equal to or more than 5. As the average aspect ratio of the primary particle 212 is longer, the diffusion resistance of the Li ion could be further decreased. The average aspect ratio of the primary particle 212 is, for example, equal to or less than 50, equal to or less than 20, or equal to or less than 10.

The average length of the long axis of the primary particle 212 is, for example, equal to or more than 0.05 $\mu$m, equal to or more than 0.1 $\mu$m, equal to or more than 0.2 $\mu$m, or equal to or more than 0.3 $\mu$m. In addition, the average length of the long axis of the primary particle 212 is, for example, equal to or less than 1.2 $\mu$m, equal to or less than 1 $\mu$m, or equal to or less than 0.8 $\mu$m.

The average length of the short axis of the primary particle 212 is, for example, equal to or more than 0.01 $\mu$m, equal to or more than 0.02 $\mu$m, equal to or more than 0.05 $\mu$m, or equal to or more than 0.1 $\mu$m. In addition, the average length of the short axis of the primary particle 212 is, for example, equal to or less than 0.6 $\mu$m, equal to or less than 0.4 $\mu$m, or equal to or less than 0.2 $\mu$m.

The average lengths of the long axis and the short axis of the primary particle 212 are measured on the basis of the cross section observation image of the second positive electrode active material particle 200 with the electron microscope. In the present description, the average lengths of the long axis and the short axis of the primary particle 212 represent arithmetical means of the long axes and the short axes of at least 100 primary particles 212.

Then, 40% or more of the primary particles 212 contained in the outer shell part 210 are radially oriented from a center of the second positive electrode active material particle 200 toward a surface of the second positive electrode active material particle 200. In a preferable aspect, the primary particles 212 oriented as described above are equal to or more than 45%, equal to or more than 55%, equal to or more than 65%, or equal to or more than 70%. By making more primary particles 212 be oriented radially, it is possible to enhance a flexibility of the second positive electrode active material particle 200 so as to become hardly broken. Incidentally, a rate of the above described primary particles 212 represents a number base rate, and represents a rate of a number of the radially oriented primary particles 212 among a whole number (at least 100) of the measured primary particles 212.

In the present description, the wording "the primary particle is radially oriented" means that an angle of a long axis direction of the primary particle 212 with respect to a reference line connecting the center of the primary particle 212 and the center of the second positive electrode active material particle 200 is equal to or less than 30°. Incidentally, the above described measurement can be implemented by performing a cross section processing on the second positive electrode active material particle 200 with an ion beam and then by observing the obtained cross section with the electron microscope. Incidentally, as another method, Electron BackScatter Diffraction method (EBSD) can be used to confirm the orientation.

The hollow part 220 is a space surrounded by the outer shell part 210. The hollow part 220 might be not completely surrounded by the outer shell part 210, and semantically covers an aspect in which a part of the outer shell part 210 is missing, or the like. Regarding a preferable aspect, in the hollow part 220, a number of the primary particles is smaller than the number in the outer shell part 210 or the primary particle is not present. In short, among the primary particles contained in the whole second positive electrode active material particle 200, a rate of the primary particles 212 contained in the outer shell part 210 is, for example, equal to or more than 90%, equal to or more than 95%, equal to or more than 98%, or 100%. By doing this, it is possible to obtain an active material having a favorable response with the Li at a baking time.

Incidentally, in the present description, the rate of the primary particles described above is measured on the basis of an area ratio of the cross section SEM.

A composition of the second positive electrode active material particle 200 might be similar to the composition of the above described first positive electrode active material particle 100. The first positive electrode active material particle 100 and the second positive electrode active material particle 200 might have the same compositions or might have different compositions from each other. In a preferable aspect, the second positive electrode active material particle 200 is a lithium-transition metal complex oxide at least containing lithium and nickel.

In the present embodiment, the second positive electrode active material particle 200 is the lithium-transition metal complex oxide containing the lithium and the transition metal, and has a composition represented by the above described general formula (i).

In some aspects, the second positive electrode active material particle 200 contains the Ni, the Co, and the Mn. In short, the general formula (i) might satisfy $0 < x < 0.5$ and $0 < y < 0.5$. Additionally, in some aspects, the general formula might satisfy $0 < x < 0.3$ and $0 < y < 0.3$.

In the embodiment shown by FIG. 2, the second positive electrode active material particle 200 includes the outer shell part 210 and the hollow part 220, but in another embodiment, it might further include a center part formed by the primary particles being aggregated. The center part is present at an inner side more than the outer shell part. Between the center part and the outer shell part, a space might be provided in which the primary particle is not present. In addition, the center part might have a solid structure, or might have a hollow structure.

A rate of the first positive electrode active material particle 100 and the second positive electrode active material particle 200 contained in the positive electrode active material layer 54 satisfies, for example, a formula: $0 < M1 / (M1 + M2) \leq 0.6$, when a mass of the first positive electrode active material particle 100 is treated as M1 and a mass of the second positive electrode active material particle 200 is treated as M2. In addition, $M1 / (M1 + M2)$ is preferably equal to or more than 0.05, or further preferably equal to or more than 0.1. In addition, $M1 / (M1 + M2)$ is preferably equal to or less than 0.3, or further preferably equal to or less than 0.2. By doing this, the balance of the first positive electrode active material particle 100 being the solid particle and the second positive electrode active material particle 200 being the hollow particle becomes suitable, and thus both of the output characteristic and the storage characteristic are favorably exhibited.

A total rate of the first positive electrode active material particle 100 and the second positive electrode active material particle 200 contained in the positive electrode active material layer 54 is preferably equal to or more than 80 wt% of the whole positive electrode active material layer 54, further preferably equal to or more than 85 wt%, or furthermore preferably equal to or more than 95 wt%. In addition, although not particularly restricting, the total rate of the first positive electrode active material particle 100 and the second positive electrode active material particle 200 contained in the positive electrode active material layer 54 could be equal to or less than 99 wt% of the whole positive electrode active material layer 54.

The positive electrode active material layer 54 might further contain an electrically conducting material, a binder, or the like. As the electrically conducting material, it is possible to suitably use, for example, a carbon black, such as acetylene black (AB), or another carbon material (a carbon nanotube, a graphite, or the like). As the binder, it is possible to use, for example, polyvinylidene fluoride (PVDF), or the like. Although not particularly restricting, the rate of the electrically conducting material is, for example, equal to or less than 5 wt% of the whole positive electrode active material layer 54, preferably equal to or less than 3 wt%, or further preferably equal to or less than 1 wt%. In addition, although not particularly restricting, the rate of the binder is, for example, equal to or less than 5 wt% of the whole positive electrode active material layer 54, preferably equal to or less than 3 wt%, or further preferably equal to or less than 1 wt%.

The positive electrode sheet 50 can be manufactured in accordance with a well-known method. In particular, for example, a slurry containing a configuration component of the positive electrode active material layer 54 is prepared. This slurry is applied to coat the positive electrode current collector 52, and then is dried, so as to form the positive electrode active material layer 54 on the positive electrode current collector 52. Incidentally, if required, a press processing might be performed on the positive electrode active material layer 54.

As the first positive electrode active material particle and the second positive electrode active material particle used in the present technique, commercially available products might be purchased, purchased commercially available products might be processed in accordance with a well-known method, or they might be manufactured. An example of a manufacturing method of the second positive electrode active material particle 200 described above would be explained in a later described test example.

Regarding the positive electrode sheet 50 in accordance with the present embodiment, a size of the first positive electrode active material particle 100 having the solid structure is smaller than a size of the second positive electrode active material particle 200 so as to have a comparatively small particle diameter (for example, equal to or less than 7 μm). By doing this, a lithium diffusion distance on the first positive electrode active material particle 100 becomes shorter, and thus it is possible to enhance the output characteristic of the secondary battery. In addition, a size of the second positive electrode active material particle 200 having the hollow structure is larger than a size of the first positive electrode active material particle 100 so as to have a comparatively large particle diameter (for example, equal to or more than 8 μm). By doing this, the specific surface area size of the second positive electrode active material particle 200 is decreased, the gas generation is suppressed, and thus the storage characteristic is enhanced. By adjusting the mix rate of the first positive electrode active material particle 100 and the second positive electrode active material particle 200 as described above to be within an appropriate range (for example, equal to or more than 0 and not more than 0.6), it is possible to implement the non-aqueous electrolyte secondary battery in which both of the outstanding output characteristic and storage characteristic are achieved.

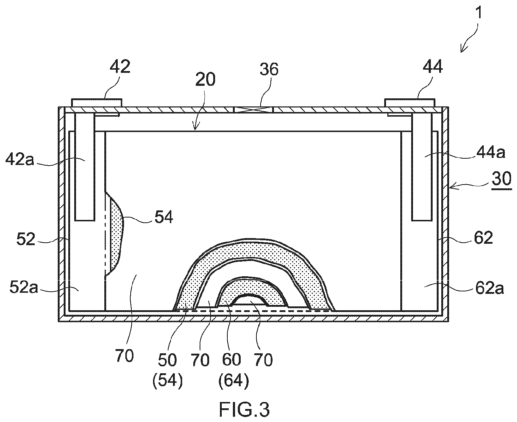

Below, while the lithium ion secondary battery is referred as an example, the non-aqueous electrolyte secondary battery including the positive electrode sheet 50 will be described. FIG. 3 is a cross section view that schematically shows a configuration of the lithium ion secondary battery 1 in accordance with one embodiment. The lithium ion secondary battery 1 shown in FIG. 3 is a sealed battery in which the wound electrode body 20 formed in the flat shape and the non-aqueous electrolyte (not shown in the figure) are accommodated by the battery case (in short, an exterior container) 30 formed in the flat square shape. The battery case 30 is provided with a positive electrode terminal 42 and a negative electrode terminal 44, which are for an outside connection, and with a thin-walled safety valve 36, which is set to release an internal pressure of the battery case 30 when the internal pressure rises to be equal to or more than a predetermined level. The positive and negative electrode terminals 42, 44 are electrically connected to positive and negative electrode collecting plates 42a, 44a, respectively. As a material of the battery case 30, for example, it is possible to use a metal material, such as aluminum, which is lightweight and has a good thermal conductivity.

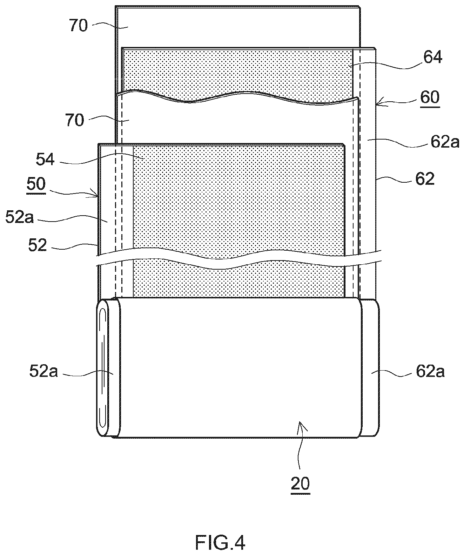

FIG. 4 is a schematic exploded view that shows a configuration of the wound electrode body 20. As shown in FIG. 3 and FIG. 4, the wound electrode body 20 has a form in which the above described positive electrode sheet 50 and negative electrode sheet 60 are stacked one on another via 2 long separators 70 and then are wound therein in a long axis direction. The positive electrode sheet 50 has a configuration in which the positive electrode active material layer 54 is formed along the long axis direction on one surface or both surfaces (here, both surfaces) of the long positive electrode current collector 52. The negative electrode sheet 60 has a configuration in which the negative electrode active material layer 64 has been formed along the long axis direction on one surface or both surfaces (here, both surfaces) of the long negative electrode current collector 62. The positive electrode current collector exposed part 52a and a negative electrode current collector exposed part 62a (in other words, a portion on which the negative electrode active material layer 64 is not formed and on which the negative electrode current collector 62 is exposed) are formed to outwardly protrude from both end parts of the wound electrode body 20 in a winding axis direction (in other words, a sheet width direction orthogonal to the long axis direction). The positive electrode current collector exposed part 52a and the negative electrode current collector exposed part 62a are respectively joined to the positive electrode collecting plate 42a and the negative electrode collecting plate 44a.

As the negative electrode current collector 62 configuring the negative electrode sheet 60, it is possible to use a well known negative electrode current collector used for the lithium ion secondary battery, and possible to use, for example, a sheet or a foil made of a metal having a favorable electrically conductive property (for example, copper, nickel, titanium, stainless steel, or the like). As the negative electrode current collector 62, it is preferable to use a copper foil, or the like. A size of the negative electrode current collector 62, which is not particularly restricted, would be suitably decided in accordance with the battery design. When the copper foil is used as the negative electrode current collector 62, a thickness of it, which is not particularly restricted, is, for example, equal to or more than 5 $\mu$m and not more than 35 $\mu$m, or preferably equal to or more than 7 $\mu$m and not more than 20 $\mu$m.

The negative electrode active material layer 64 contains the negative electrode active material. As the negative electrode active material, it is possible to use, for example, a carbon material, such as graphite, hard carbon, and soft carbon. The negative electrode active material layer 64 can further contain a binder, a thickening agent, or the like. As the binder, it is possible to use, for example, styrene butadiene rubber (SBR), or the like. As the thickening agent, it is possible to use, for example, carboxymethyl cellulose (CMC), or the like.

As the separator 70, it is possible to use various porous sheets similar to ones conventionally used for the lithium ion secondary battery, and as an example of it, it is possible to use a porous resin sheet consisted of a resin, such as polyethylene (PE) and polypropylene (PP). The porous resin sheet described above might have a single layer structure, or might have a multi layers, being 2 or more layers, structure (for example, 3 layers structure in which a PP layer is laminated on both surfaces of a PE layer). The separator 70 might include a heat resistance layer (HRL).

As the non-aqueous electrolyte, it is possible to use one similar to a conventional lithium ion secondary battery, and it is possible to typically use a non-aqueous electrolyte in which an organic solvent (a non-aqueous solvent) contains a supporting salt. As the non-aqueous solvent, it is possible to use an aprotic solvent, such as carbonates, esters, and ethers. Among them, since an effect of decreasing a low temperature resistance due to the positive electrode material becomes particularly higher, the carbonates are preferable. As an example of the carbonates, it is possible to use ethylene carbonate (EC), diethyl carbonate (DEC), dimethyl carbonate (DMC), ethyl methyl carbonate (EMC), monofluoroethylene carbonate (MFEC), difluoroethylene carbonate (DFEC), monofluoromethyl difluoromethyl carbonate (F-DMC), trifluoro dimethyl carbonate (TFDMC), or the like. Regarding a non-aqueous solvent as described above, one kind could be used by itself, or 2 or more kinds could be suitably combined so as to be used. As the supporting salt, for example, it is possible to suitably use a lithium salt, such as $LiPF_6$, $LiBF_4$, and lithium bis(fluorosulfonyl)imide (LiFSI). As a concentration of the supporting salt, it is preferable to be equal to or more than 0.7 mol/L and not more than 1.3 mol/L.

Incidentally, the non-aqueous electrolyte can contain, if the effect of the present disclosure is not spoiled significantly, a component other than the above described non-aqueous solvent and supporting salt, for example, various additive agents, such as gas generation agent, coating film formation agent, dispersing agent, and thickening agent.

Above, as one embodiment, the square-shaped lithium ion secondary battery including the flat-shaped wound electrode body has been explained. However, the lithium ion secondary battery can be configured as a lithium ion secondary battery including a laminate type electrode body (in other words, an electrode body in which plural positive electrodes and plural negative electrodes are alternately laminated). In addition, the lithium ion secondary battery can be configured as a cylindrical shape lithium ion secondary battery, a laminate case type lithium ion secondary battery, or the like. Furthermore, it can be constructed to be an all-solid state secondary battery in which the electrolyte is a solid electrolyte.

The lithium ion secondary battery 1 can be used for various purposes. As for a suitable use, it is possible to be a power supply for driving which is mounted on a vehicle, such as electric vehicle (BEV; Battery Electric Vehicle), hybrid vehicle (HEV; Hybrid Electric Vehicle), and plug-in hybrid vehicle (PHEV; Plug-in Hybrid Electric Vehicle). In addition, the lithium ion secondary battery 1 can be used as a storage battery of a small electric power storage apparatus, or the like. The lithium ion secondary battery 1 can be used in a form of a battery pack in which plural batteries are connected in series and/or parallel.

As described above, as a particular aspect of the herein disclosed technique, it is possible to recite about below described items.

Item 1: A positive electrode used for a non-aqueous electrolyte secondary battery, comprising:

a current collector; and
an active material layer that is arranged on a surface of the current collector, characterized in that,
the active material layer comprises a first positive electrode active material particle (100) and a second positive electrode active material particle (200),

the first positive electrode active material particle (100) has:

an average particle diameter which is equal to or more than 1 $\mu$m and not more than 7 $\mu$m based on a laser diffraction scattering method; and
a void rate which is measured on a basis of a cross section SEM image and which is less than 10%,

the second positive electrode active material particle (200) comprises an outer shell part (210) and a hollow part (220) that is surrounded by the outer shell part,
the second positive electrode active material particle (200) has: an average particle diameter which is based on the laser diffraction scattering method and which is equal to or more than 8 $\mu$m and not more than 14 $\mu$m; and
a rate of voids which is measured on a basis of a cross section SEM image and which is equal to or more than 10%,
80% or more of the voids are present at an inner side more than the outer shell part, and
a mass M1 of the first positive electrode active material particle (100) and a mass M2 of the second positive electrode active material particle (200) satisfy a following formula:

$$0 < M1/(M1 + M2) \leq 0.6.$$

Item 2: The positive electrode according to item 1, wherein
a BET specific surface area size of the first positive electrode active material particle (100) is equal to or more than 1.5 $m^2$/g and not more than 2.3 $m^2$/g.
Item 3: The positive electrode according to item 1 or 2, wherein
The mass M1 of the first positive electrode active material particle (100) and the mass M2 of the second positive electrode active material particle (200) satisfy a following formula:

$$0 < M1/(M1 + M2) \leq 0.2.$$

Item 4: The positive electrode according to any one of items 1 to 3, wherein
90% or more of primary particles (212) contained in a whole of the second positive electrode active material particle are present (200) at the outer shell part (210).
Item 5: The positive electrode according to any one of items 1 to 4, wherein
regarding 40% or more of the primary particles (212) being present at the outer shell part, an angle defined by a long axis direction of the primary particle (212) with respect to a reference line connecting a center of the primary particle (212) and a center of the second positive electrode active material particle (200) is equal to or less than 30°.
Item 6: The positive electrode according to any one of items 1 to 5, wherein
the first positive electrode active material particle (100) and the second positive electrode active material particle (200) are chemical compounds, each represented by a general formula:

$Li_dNi_{(1-x-y-z)}Co_xMn_yA_zO_2$

(note, $0 \leq x \leq 0.5$, $0 \leq y \leq 0.5$, $0 \leq z \leq 0.1$, $0.95 \leq d \leq 1.2$, A is 1 kind or more of additive elements selected from a group consisting of Al, Ti, Zr, Nb, Mo, and W).
Item 7: A non-aqueous electrolyte secondary battery, comprising the positive electrode according to any one of items 1 to 6.

Below, a test example related to the present technique will be explained. However, the present technique is not restricted to a content shown by the below described test example.

[Manufacture of positive electrode active material particle having hollow structure]

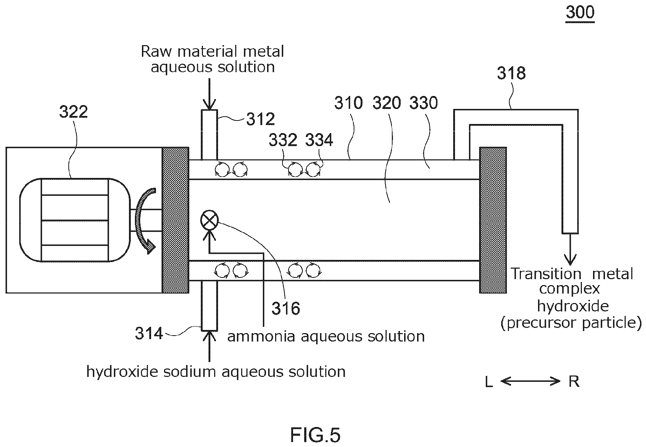

A crystallization apparatus was used that can generate Taylor vortex in a response chamber 330. FIG. 5 shows a rough configuration of the used crystallization apparatus 300. As shown in FIG. 5, the crystallization apparatus 300 includes a outer cylinder 310 formed in a cylindrical shape, an inner cylinder 320 arranged on a coaxial with the outer cylinder 310 and formed in a cylindrical shape, and a motor 322 connected to the inner cylinder 320. The inner cylinder 320 has a diameter smaller than the outer cylinder 310. The crystallization apparatus 300 includes the response chamber 330 between the outer cylinder 310 and the inner cylinder 320. The response chamber 330 is an area in which a crystallization response is performed, and is an area in which Taylor vortex streams 332, 334 are generated. Incidentally, the Taylor vortex stream represents a stream of fluid in which the Taylor vortex was generated. The Taylor vortex represents a form of a whirl flowing in a ring shape.

As an example of manufacturing the positive electrode active material particle having the hollow structure, at first, in the 0.1 L response chamber 330, an oxygen concentration was adjusted to be 25 vol%, 1 wt% ammonia water was added, the inner cylinder 320 was rotated at 2000 rpm of rotation number about an axis of the inner cylinder 320, and thus the Taylor vortex was generated on the ammonia water in the response chamber 330. Incidentally, in FIG. 5, only parts of the Taylor vortex streams 332, 334 are shown in figures, but the Taylor vortex streams were generated over the whole of the response chamber 330. Next, 30 wt% hydroxide sodium aqueous solution was supplied to the response chamber 330, then adjustment was performed to implement pH 12 of a mix liquid inside the response chamber 330 based on a reference of liquid temperature 25°C.

Nickel sulfate, cobalt sulfate, and manganese sulfate were dissolved into water, and thus 1 mol/L of raw material metal aqueous solution was prepared. At that time, a mol ratio of the nickel sulfate : the cobalt sulfate : the manganese sulfate was made to be 60 : 20 : 20.

Into the mix liquid inside the response chamber 330 where the Taylor vortex was caused, the above described raw material metal aqueous solution, 1 wt% ammonia aqueous solution, and 30 wt% hydroxide sodium aqueous solution were supplied at a ratio 1 : 1 : 1 on the volume basis from a first supply port 312, a second supply port 314, and a third supply port 316, and then crystallization was performed at a condition of pH 12 for 30 minutes. After that, a crystallized product was taken out from an exhausting port 318, the resultant was washed, filtered, and dried, and then a powdered composite hydroxide (a precursor) was obtained.

With an ICP optical emission spectrometer, it was confirmed that the obtained composite hydroxide described above was $Ni_{0.6}Co_{0.2}Mn_{0.2}(OH)_2$.

To make a mol ratio (Li : M) of the lithium (Li) and metal elements (M) other than the lithium be 1.1 : 1, a lithium chemical compound was mixed into the above described composite hydroxide. This mixture was held in a baking furnace at 700°C under an oxidizing atmosphere for 5 hours and then baked. By doing this, the positive electrode active material was obtained. The positive electrode active material obtained as described above was used in some examples described below as a second active material.

[Measurement of average particle diameter of positive electrode active material particle]

The average particle diameter of the positive electrode active material was evaluated as a particle diameter (D50) corresponding to an accumulation 50% on a volume basis particle size distribution measured by a laser diffraction scattering type particle size analyzer.

[Evaluation of structure of positive electrode active material]

In order to observe a cross section shape of the positive electrode active material particle, a cross section processing was performed on the positive electrode active material particle with an ion beam, and thus a SEM image of the cross section shape of the positive electrode active material particle was obtained. Based on the SEM image described above, a rate of void portions (a rate of void portions of the cross section occupying the cross section area of the particle) and a distribution were measured. A structure, whose void rate was less than 10%, was treated as the solid structure. In addition, a structure, whose void rate was equal to or more than 10% and in which 80% or more of the voids were present at an inner side more than the outer shell part, was treated as the hollow structure.

The positive electrode active material particle obtained by the method with the above described Taylor vortex was confirmed to include the outer shell part and the hollow part surrounded by the outer shell part, to have the void rate being equal to or more than 25%, and to have the primary particles configuring the particle and 90% or more of the primary particles being present at the outer shell part on the cross section of the particle.

[Evaluation of orientation rate of positive electrode active material having hollow structure]

Regarding the positive electrode active material particle having the hollow structure, a SEM observation on the cross section of the particle was performed to confirm the orientation of the primary particle contained in the outer shell part. In particular, a positive electrode active material particle was evaluated as to be radially oriented whose angle of the primary particle in the long axis direction was equal to or less than 30° with respect to a reference line connecting a center of the primary particle and a center of the positive electrode active material particle. At random, 100 or more primary particles contained in the outer shell part were observed, so as to obtain a rate of the primary particles oriented radially (a radial orientation rate). The results are shown in Table 1.

Incidentally, in addition, regarding a precursor particle of the positive electrode active material particle, the cross section SEM image was obtained, and it was confirmed that aspect ratios and orientation rates of the primary particles before and after baking had little difference.

[BET specific surface area size measurement of positive electrode active material]

By a fluid type gas adsorbent method specific surface area size measuring apparatus, the BET specific surface area size of the positive electrode active material was measured.

(Practical example 1)

[Manufacture of positive electrode plate (positive electrode sheet)]

A first active material having the solid structure, whose average particle diameter was 3 $\mu$m and whose BET specific surface area size was 2.2 m$^2$/g, and the second active material obtained by the above described method and having the hollow structure, whose average particle diameter was 12 $\mu$m and whose radial orientation rate was 75%, were prepared. The first active material and the second active material, whose chemical formulas both were represented by $Li_{1.1}Ni_{0.6}Co_{0.2}Mn_{0.2}O_2$, were used. The first active material and the second active material were mixed to make the mass ratio be 20 : 80, and then the resultant was treated as the positive electrode active material of practical example 1. To implement the above obtained positive electrode active material : the electrically conducting material : the binder = 100 : 1 : 1 (weight basis), N-methyl-2-pyrrolidone (NMP) was mixed so as to prepare a positive electrode mix agent paste. As the electrically conducting material, the acetylene black was used. As the binder, the PVDF was used. The prepared positive electrode mix agent paste was applied to coat the aluminum foil being 13 $\mu$m, dried, then pressed to have a predetermined thickness, and processed to have a predetermined size, so as to manufacture the positive electrode plate.

[Manufacture of negative electrode plate (negative electrode sheet)]

To implement graphite : SBR : CMC = 100 : 1: 1 (weight basis), water was mixed so as to prepare a negative electrode mix agent paste. The prepared negative electrode mix agent paste was applied to coat the copper foil, dried, then pressed to have a predetermined thickness, and cut out to have a predetermined size, so as to manufacture the negative electrode plate.

[Manufacture of non-aqueous electrolyte secondary battery]

The manufactured positive electrode plate and negative electrode plate were mutually laminated via the separator so as to manufacture the laminate type electrode body. To the positive electrode plate and to the negative electrode plate, leads were respectively attached. After the manufactured laminate type electrode body was accommodated in the outer case configured with an aluminum laminate sheet, the non-aqueous electrolytic solution was injected and then an opening part of the outer case was sealed, so as to manufacture a test cell (a laminate cell). Incidentally, the non-aqueous electrolytic solution was used in which a solvent satisfying EC : FEC : EMC : DMC = 15 : 5 : 40 : 40 (volume basis) and 1 M of $LiPF_6$ as a Li salt were contained.

(Practical example 2)

The first active material having the solid structure, whose average particle diameter was 5 $\mu$m and whose BET specific surface area size was 1.8 m$^2$/g, and the second active material obtained by the above described method and having the hollow structure, whose average particle diameter was 9 μm and whose radial orientation rate was 68%, were prepared. The first active material and the second active material, whose chemical formulas both were represented by $Li_{1.1}Ni_{0.6}Co_{0.2}Mn_{0.2}O_2$, were used. The first active material and the second active material were mixed to make the mass ratio be 10 : 90, and then the resultant was treated as the positive electrode active material of practical example 2. A following procedure till the manufacture of the test cell was similar to the practical example 1.

(Practical example 3)

The first active material having the solid structure, whose average particle diameter was 5 μm and whose BET specific surface area size was 1.8 $m^2$/g, and the second active material having the hollow structure, whose average particle diameter was 10 μm, were prepared. This second active material consists of a secondary particle formed by aggregated plural primary particles. This secondary particle includes a center part of the hollow structure, a space part which is disposed at an outer side of the center part and in which the primary particle is not present, and an outer shell part which is electrically conductive to the center part. Regarding this secondary particle, an average value of a ratio of an outer diameter of the above described center part with respect to a particle diameter of the secondary particle was 30 to 80%. In addition, the radial orientation rate of the primary particle configuring the outer shell part of the secondary particle was 70%. The first active material and the second active material, whose chemical formulas both were represented by $Li_{1.1}Ni_{0.6}Co_{0.2}Mn_{0.2}O_2$, were used. The first active material and the second active material were mixed to make the mass ratio be 10: 90, and then the resultant was treated as the positive electrode active material of practical example 3. A following procedure till the manufacture of the test cell was similar to the practical example 1.

(Practical example 4)

The first active material having the solid structure, whose average particle diameter was 4 μm and whose BET specific surface area size was 0.8 $m^2$/g, and the second active material obtained by the above described method and having the hollow structure, whose average particle diameter was 12 μm and whose radial orientation rate was 65%, were prepared. The first active material and the second active material, whose chemical formulas both were represented by $Li_{1.1}Ni_{0.6}Co_{0.2}Mn_{0.2}O_2$, were used. The first active material and the second active material were mixed to make the mass ratio be 20 : 80, and then the resultant was treated as the positive electrode active material of practical example 4. A following procedure till the manufacture of the test cell was similar to the practical example 1.

(Practical example 5)

The first active material having the solid structure, whose average particle diameter was 4 μm and whose BET specific surface area size was 2.4 $m^2$/g, and the second active material obtained by the above described method and having the hollow structure, whose average particle diameter was 12 μm and whose radial orientation rate was 65%, were prepared. The first active material and the second active material, whose chemical formulas both were represented by $Li_{1.1}Ni_{0.6}Co_{0.2}Mn_{0.2}O_2$, were used. The first active material and the second active material were mixed to make the mass ratio be 60 : 40, and then the resultant was treated as the positive electrode active material of practical example 5. A following procedure till the manufacture of the test cell was similar to the practical example 1.

(Comparative example 1)

The first active material having the solid structure, whose average particle diameter was 5 μm and whose BET specific surface area size was 2.4 $m^2$/g, and the second active material having the hollow structure, whose average particle diameter was 5 μm, were prepared. This second active material consists of a secondary particle formed by aggregated plural primary particles. This secondary particle includes a center part of the hollow structure, a space part which is disposed at an outer side of the center part and in which the primary particle is not present, and an outer shell part which is electrically conductive to the center part. Regarding this secondary particle, an average value of a ratio of an outer diameter of the above described center part with respect to a particle diameter of the secondary particle was 30 to 80%. In addition, the radial orientation rate of the primary particle configuring the outer shell part of the secondary particle was 65%. The first active material and the second active material, whose chemical formulas both were represented by $Li_{1.1}Ni_{0.6}Co_{0.2}Mn_{0.2}O_2$, were used. The first active material and the second active material were mixed to make the mass ratio be 20 : 80, and then the resultant was treated as the positive electrode active material of comparative example 1. A following procedure till the manufacture of the test cell was similar to the practical example 1.

(Comparative example 2)

The first active material having the solid structure, whose average particle diameter was 10 $\mu$m and whose BET specific surface area size was 3.4 m$^2$/g, and the second active material obtained by the above described method and having the hollow structure, whose average particle diameter was 12 $\mu$m and whose radial orientation rate was 55%, were prepared. The first active material and the second active material, whose chemical formulas both were represented by Li$_{1.1}$Ni$_{0.6}$Co$_{0.2}$Mn$_{0.2}$O$_2$, were used. The first active material and the second active material were mixed to make the mass ratio be 30: 70, and then the resultant was treated as the positive electrode active material of comparative example 2. A following procedure till the manufacture of the test cell was similar to the practical example 1.

<Measurement of initial capacity>

Under an environment at 25°C, the test cell was subjected to a CCCV charge to be 4.2 V A current value of a CC charge at that time was made to be C/3. After that, an electric discharge was performed at C/3 current value to be 3 V An electric discharge capacity at that time was treated as an initial capacity. Table 1 shows a result in which the comparative example 1 was used as a reference.

<IV resistance measurement>

Under an environment at 25°C, the test cell was subjected to an electric charge to make SOC (state of charge) be 50%, and left for 1 hour. After that, the electric discharge was performed at 5C current for 10 seconds. In a case where an OCV voltage just before the electric discharge was treated as V0 and the voltage at the 10 seconds electrically discharging time was treated as V1, a following formula was used so as to obtain IV resistance value.

$$\text{Formula: IV resistance} = (V0 - V1) / 5C \text{ current value}$$

Table 1 shows a result with a ratio in which the later described comparative example 1 was used as the reference.

<Measurement of gas generation amount>

Under an environment at 25°C, the test cell was subjected to the CCCV charge at 4.4 V charge electric potential and 0.3 C charge current. The electric charge was ended when the charge current became 0.01 C. After the electric charge, the test cell was kept in a thermostatic chamber at 60°C, and stored for 24 hours. After that, the test cell was left to cool under 25°C atmosphere. After cooling, a volume change between the test cell before the storage and the test cell after the storage was measured, so as to obtain a gas generation amount (mL) during the storage. Volumes of the test cell before the storage and the test cell after the storage were measured on the basis of Archimedes' principle, and then the difference of them was treated as the gas generation amount.

[Table 1]

Table 1

| | Average particle diameter of first active material ($\mu$m) | Average particle diameter of second active material ($\mu$m) | M1/(M1+M2) | BET specific surface area size of first active material (m$^2$/g) | Radial orientation rate of primary particle of second active material (%) | Initial capacity (%) | Resistance (%) | Gas generation amount (mL) |
|---|---|---|---|---|---|---|---|---|
| Practical example 1 | 3 | 12 | 0.2 | 2.2 | 75 | 112 | 85 | 1.9 |
| Practical example 2 | 5 | 9 | 0.1 | 1.8 | 68 | 105 | 91 | 1.8 |

(continued)

| | Average particle diameter of first active material ($\mu$m) | Average particle diameter of second active material ($\mu$m) | M1/(M1+M2) | BET specific surface area size of first active material (m²/g) | Radial orientation rate of primary particle of second active material (%) | Initial capacity (%) | Resistance (%) | Gas generation amount (mL) |
|---|---|---|---|---|---|---|---|---|
| Practical example 3 | 5 | 10 | 0.1 | 1.8 | 70 | 106 | 90 | 2.2 |
| Practical example 4 | 4 | 12 | 0.2 | 0.8 | 65 | 98 | 104 | 2.4 |
| Practical example 5 | 5 | 12 | 0.6 | 2.4 | 55 | 108 | 102 | 2.5 |
| Comparative example 1 | 5 | 5 | 0.2 | 2.4 | 65 | 100 | 100 | 4.2 |
| Comparative example 2 | 10 | 12 | 0.3 | 3.4 | 55 | 97 | 133 | 2.3 |

<Evaluation of test example>

Although the comparative example 1 is a test example in which comparatively small hollow particles having 5 $\mu$m average particle diameter was used so as to implement a secondary battery having the small resistance and outstanding to the output characteristic, it caused the large gas generation amount and had a room for improvement on the storage characteristic. Here, when the practical examples 1 to 5 and the comparative example 1 were compared, the practical examples 1 to 5 were as shown in Table 1, with respect to the comparative example 1, able to decrease the gas generation amount while keeping the similar resistance or further suppressing the resistance. In short, it can be understood about the practical examples 1 to 5 that the secondary battery, in which the storage characteristic was improved and both of the outstanding output characteristic and storage characteristic were achieved, was implemented.

Above, specific examples of the present technique have been explained in detail, but these are merely illustrative, and are not construed as limiting the scope of the appended claims. The technique recited in claims contains matters in which the above-illustrated specific example is variously deformed or changed.

**Claims**

1. A positive electrode used for a non-aqueous electrolyte secondary battery, comprising:

a current collector; and
an active material layer that is arranged on a surface of the current collector, **characterized in that**,

the active material layer comprises a first positive electrode active material particle (100) and a second positive electrode active material particle (200),
the first positive electrode active material particle (100) has:

an average particle diameter which is equal to or more than 1 $\mu$m and not more than 7 $\mu$m based on a laser diffraction scattering method; and
a void rate which is measured on a basis of a cross section SEM image and which is less than 10%,

the second positive electrode active material particle (200) comprises an outer shell part (210) and a hollow part (220) that is surrounded by the outer shell part (210),
the second positive electrode active material particle (200) has: an average particle diameter which is based on the laser diffraction scattering method and which is equal to or more than 8 $\mu$m and not more than 14 $\mu$m;

and
a rate of voids which is measured on a basis of a cross section SEM image and which is equal to or more than 10%,
80% or more of the voids are present at an inner side more than the outer shell part (210), and
a mass M1 of the first positive electrode active material particle (100) and a mass M2 of the second positive electrode active material particle (200) satisfy a following formula:

$$0 < M1/(M1 + M2) \leq 0.6.$$

2. The positive electrode according to claim 1, wherein
a BET specific surface area size of the first positive electrode active material particle (100) is equal to or more than 1.5 $m^2$/g and not more than 2.3 $m^2$/g.

3. The positive electrode according to claim 1 or 2, wherein
The mass M1 of the first positive electrode active material particle (100) and the mass M2 of the second positive electrode active material particle (200) satisfy a following formula:

$$0 < M1/(M1 + M2) \leq 0.2.$$

4. The positive electrode according to any one of claims 1 to 3, wherein
90% or more of primary particles (212) contained in a whole of the second positive electrode active material particle (200) are present at the outer shell part (210).

5. The positive electrode according to claim 4, wherein
Regarding 40% or more of the primary particles (212) being present at the outer shell part (210), an angle defined by a long axis direction of the primary particle (212) with respect to a reference line connecting a center of the primary particle (212) and a center of the second positive electrode active material particle (200) is equal to or less than 30°.

6. The positive electrode according to any one of claims 1 to 5, wherein
the first positive electrode active material particle (100) and the second positive electrode active material particle (200) are chemical compounds, each represented by a general formula:

$$Li_d Ni_{(1-x-y-z)} Co_x Mn_y A_z O_2$$

(note, $0 \leq x \leq 0.5$, $0 \leq y \leq 0.5$, $0 \leq z \leq 0.1$, $0.95 \leq d \leq 1.2$, A is 1 kind or more of additive elements selected from a group consisting of Al, Ti, Zr, Nb, Mo, and W).

7. A non-aqueous electrolyte secondary battery, comprising the positive electrode according to any one of claims 1 to 6.

FIG.1

FIG.2

FIG.3

FIG.4

300

Raw material metal
aqueous solution

322

318

310 320 330

~312
332 334

⊗

316

314~

ammonia aqueous solution

hydroxide sodium aqueous solution

Transition metal
complex
hydroxide
(precursor particle)

L ⟵⟶ R

FIG.5

Europäisches
Patentamt

European
Patent Office

Office européen
des brevets

## EUROPEAN SEARCH REPORT

**Application Number**

EP 24 18 6204

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | JP 2023 529800 A (NAGATA HIROAKI) 12 July 2023 (2023-07-12) * paragraphs [0106], [0063], [0035], [0109], [0049], [0067], [0096], [0107]; figure 2 * ----- | 1-7 | INV. H01M4/131 H01M4/36 H01M4/505 H01M4/525 H01M10/052 |
| Y | US 2023/197950 A1 (HIGUCHI TAKATOSHI [JP] ET AL) 22 June 2023 (2023-06-22) * paragraph [0046] * ----- | 1-7 | ADD. H01M4/02 |

TECHNICAL FIELDS
SEARCHED        (IPC)

H01M

The present search report has been drawn up for all claims

| Place of search | Date of completion of the search | Examiner |
|---|---|---|
| Munich | 10 January 2025 | Lavorenti, Marek |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 6204

This annex lists the patent family members relating to the patent documents cited in the above-mentioned European search report.
The members are as contained in the European Patent Office EDP file on
The European Patent Office is in no way liable for these particulars which are merely given for the purpose of information.

10-01-2025

| Patent document cited in search report | Publication date | Patent family member(s) | Publication date |
|---|---|---|---|
| JP 2023529800 A | 12-07-2023 | CN 115702506 A | 14-02-2023 |
| | | DE 102020115222 A1 | 09-12-2021 |
| | | JP 2023529800 A | 12-07-2023 |
| | | KR 20230009451 A | 17-01-2023 |
| | | US 2023275223 A1 | 31-08-2023 |
| | | WO 2021249700 A1 | 16-12-2021 |
| US 2023197950 A1 | 22-06-2023 | CN 116314646 A | 23-06-2023 |
| | | JP 7503536 B2 | 20-06-2024 |
| | | JP 2023091568 A | 30-06-2023 |
| | | US 2023197950 A1 | 22-06-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019077577 A
- WO 2014181891 A
- JP 2017123236 A
- JP 2021120937 A